Europäisches Patentamt

European Patent Office

Office européen des brevets

(19)

(11) **EP 0 563 347 B1**

(12) **EUROPÄISCHE PATENTSCHRIFT**

(45) Veröffentlichungstag und Bekanntmachung des Hinweises auf die Patenterteilung:
**19.02.1997 Patentblatt 1997/08**

(21) Anmeldenummer: **92920764.5**

(22) Anmeldetag: **01.10.1992**

(51) Int Cl.6: **G01P 3/48**, F02D 41/24, G01P 21/00

(86) Internationale Anmeldenummer:
**PCT/DE92/00839**

(87) Internationale Veröffentlichungsnummer:
**WO 93/07497 (15.04.1993 Gazette 1993/10)**

(54) **VERFAHREN ZUR ADAPTION VON MECHANISCHEN TOLERANZEN EINES GEBERRADES**

PROCESS FOR ADAPTING MECHANICAL TOLERANCES OF A PICK-UP WHEEL

PROCEDE POUR L'ADAPTATION DE TOLERANCES MECANIQUES D'UNE ROUE DE CAPTEUR

(84) Benannte Vertragsstaaten:
**DE GB**

(30) Priorität: **11.10.1991 DE 4133679**

(43) Veröffentlichungstag der Anmeldung:
**06.10.1993 Patentblatt 1993/40**

(73) Patentinhaber:
• **ROBERT BOSCH GMBH**
  **70442 Stuttgart (DE)**
  Benannte Vertragsstaaten:
  **DE GB**
• **AUDI AG**
  **D-7107 Neckarsulm (DE)**
  Benannte Vertragsstaaten:
  **DE**

(72) Erfinder:
• **KLENK, Martin**
  **D-7150 Backnang (DE)**
• **KANTSCHAR, Anton**
  **D-7147 Eberdingen-Hochdorf (DE)**
• **MUELLER, Werner**
  **D-7101 Untergruppenbach (DE)**
• **WIMMER, Wolfgang**
  **D-7101 Erlenbach (DE)**

(56) Entgegenhaltungen:
WO-A-86/00415         DE-A- 3 432 872
DE-A- 4 009 285       US-A- 4 445 087
US-A- 4 569 027       US-A- 4 972 333

**Beschreibung**

Stand der Technik

Die Erfindung geht aus von einem Verfahren zur Adaption von mechanischen Toleranzen eines Geberrades nach der Gattung des Hauptanspruchs.

Es ist bekannt, zur Erfassung einer bestimmten Stellung einer Welle, beispielsweise der Kurbelwelle oder der Nockenwelle einer Brennkraftmaschine, eine Geberscheibe, an deren Oberfläche Markierungen angebracht sind, an der betreffenden Welle zu befestigen und die Markierungen mit einem feststehenden Aufnehmer abzutasten. Dabei werden im Aufnehmer, beispielsweise einem induktiven Aufnehmer, von den vorbeilaufenden Markierungen Spannungsimpulse induziert, die in einer nachfolgenden Auswerteschaltung bzw. einem nachfolgenden Steuergerät verarbeitet werden, wobei aus den zeitlichen Abständen der Spannungsimpulse die Drehzahl der Welle berechnet wird.

Eine Vorrichtung, mit der auf diese Weise die Drehzahl sowie die Winkelstellung der Welle ermittelt wird, ist beispielsweise aus der EP 0 188 433 bekannt. Dabei wird ein Geberrad mit einer Vielzahl von Winkelmarken abgetastet und die erhaltene Spannung in eine Rechteckspannung umgeformt. Aus den zeitlichen Abständen gleichartiger Winkelmarkenflanken wird die Drehzahlinformation gewonnen. Diese bekannte Einrichtung hat den Nachteil, daß die Winkelmarken entweder sehr exakt ausgeführt sein müssen, so daß die Abstände zwischen gleichartigen Winkelmarkenflanken sehr genau sind, oder daß die Festlegung der Drehzahl nur ungenau erfolgen kann.

Im ersten Fall ist eine sehr aufwendige und kostenintensive Herstellung erforderlich, im zweiten Fall ist die Drehzahlmessung so ungenau, daß sie für moderne Brennkraftmaschinen nicht verwendet werden kann.

Aus der DE-OS 30 18 496 ist ein Verfahren und eine Vorrichtung zur Messung eines Winkels bekannt, bei dem oder der ein mit einer sich drehenden Welle verbundenes Geberrad mit einer Vielzahl von Markierungen von einem Aufnehmer abgetastet wird, wobei zur Steigerung der Genauigkeit in einem Eichlauf zunächst die Abstände zwischen den einzelnen Winkelmarken ausgemessen werden, diese Meßwerte gespeichert werden und in einem nachfolgenden Auswerteverfahren zur Messung eines Winkels berücksichtigt werden.

Die bekannte Vorrichtung bzw. das bekannte Verfahren zeigen jedoch nicht, daß aus dem zeitlichen Abstand gleichartiger Winkelmarkenflanken eine exakte Bestimmung der Drehzahl der Welle möglich ist, außerdem hat die bekannte Vorrichtung bzw. das bekannte Verfahren den Nachteil, daß vor Inbetriebnahme ein Eichlauf durchgeführt werden muß und eine Überprüfung bzw. Anpassung an gegebenenfalls veränderte Parameter während des Betriebes nicht mehr erfolgen kann.

Aus der US-PS 4 445 087 ist ein Verfahren zur Messung der Winkelgeschwindigkeit eines rotierenden Körpers bekannt, bei dem ein Körper mit einer Vielzahl von Winkelmarken mit Hilfe eines feststehenden Sensors abgetastet wird. Aus dem Zeitabstand der durch die vorbeilaufenden Winkelmarken erzeugten Impulse wird beispielsweise eine Drehzahl ermittelt. Zur Verbesserung der Genauigkeit wird beim bekannten Verfahren vorgeschlagen, zunächst einen Eichlauf durchzuführen, bei dem festgestellt werden kann, ob die Abstände zwischen verschiedenen Winkelmarken identisch sind. Falls dies nicht der Fall ist, werden Korrekturfaktoren gebildet, die bei der weiteren Auswertung berücksichtigt werden. Das bekannte Verfahren betrifft somit eine kontinuierliche Bestimmung von Korrekturfaktoren. Beim bekannten Verfahren muß jedoch zunächst ein Eichlauf durchgeführt werden. Ein Einsatz des geschilderten Verfahrens im Zusammenhang mit der Drehzahlmessung bei einer Brennkraftmaschine wird jedoch nicht vorgeschlagen.

Vorteile der Erfindung

Das erfindungsgemäße Verfahren mit den kennzeichnenden Merkmalen des Hauptanspruchs hat demgegenüber den Vorteil, daß die Adaption der Geberradtoleranzen auch während des Betriebes erfolgen kann, wenn Bedingungen vorliegen, bei denen sichergestellt ist, daß keine Drehzahlveränderungen bzw. Drehzahlschwankungen auftreten, dies ist üblicherweise im Schubbetrieb der Fall.

Durch Überprüfung der Adaptionswerte kann jederzeit festgestellt werden, wieweit die Adaption bereits fortgeschritten ist. Durch Filterung der Korrekturwerte und Filterung der Adaptionswerte läßt sich eine besonders genaue Adaption durchführen.

Besonders vorteilhaft ist, daß nach erfolgter Adaption aus den einzelnen Impulsabständen die Drehzahl sehr genau bestimmt werden kann, auch wenn die Winkelmarken nicht besonders exakt gefertigt sind, so daß unterschiedlich lange Segmente entstehen, da die unterschiedlichen Segmentlängen bereits kompensiert sind.

Mit Hilfe dieser exakten Drehzahlwerte ist eine besonders zuverlässige Aussetzererkennung möglich, da die beim Auftreten von Verbrennungsaussetzern eintretenden Drehzahlschwankungen zuverlässig erkannt werden, damit ist ebenfalls eine sehr zuverlässige Bestimmung der Laufruhe der Brennkraftmaschine möglich.

Durch die in weitern Unteransprüchen aufgeführten Maßnahmen lassen sich zusätzliche Vorteile des in Anspruch 1 beanspruchten Verfahrens erzielen .

Zeichnung

Ein Ausführungsbeispiel der Erfindung ist in der Zeichnung dargestellt und wird in der nachfolgenden Beschreibung näher erläutert.

Dabei zeigt Figur 1 den grundsätzlichen Aufbau des Geberrades sowie des Aufnehmers und der nachfolgenden Auswerteschaltung, in Figur 2 ist eine typische, vom Aufnehmer gelieferte, jedoch bereits aufbereitete Impulsfolge dargestellt, Figur 3 zeigt ein Flußdiagramm zur Erläuterung des erfindungsgemäßen Verfahrens und in Figur 4 ist der Verlauf der Winkelfehler über einer Anzahl von Kurbelwellenumdrehungen aufgetragen.

Beschreibung des Ausführungsbeispiels

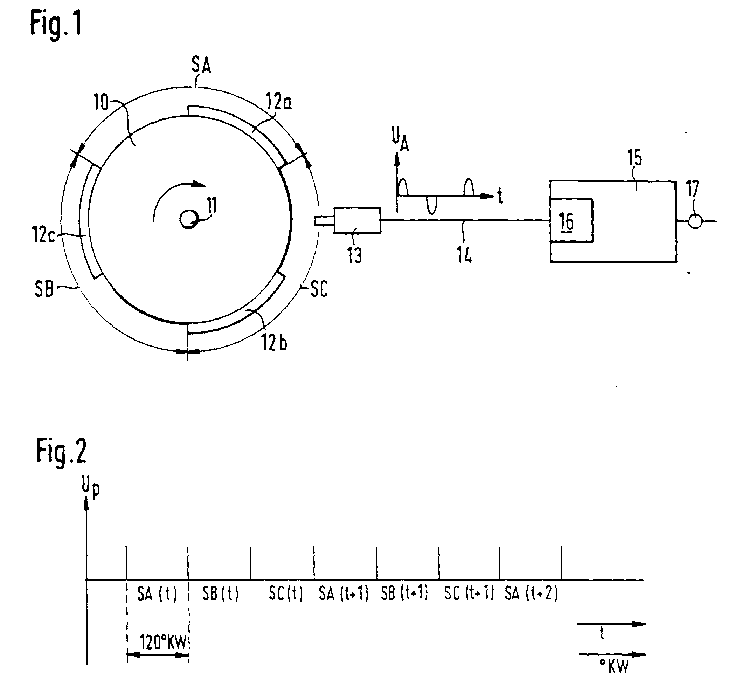

In Figur 1 ist ein Geberrad 10 abgebildet, das mit der Kurbelwelle 11 einer Brennkraftmaschine verbunden ist und an seiner Oberfläche drei Markierungen 12a, 12b und 12c aufweist. In der Nähe der Oberfläche des Geberrades 10 ist ein Aufnehmer 13 angeordnet, der über eine Leitung 14 mit einem Steuergerät 15 verbunden ist.

Zwischen dem Aufnehmer 13 und dem Steuergerät 15 bzw. im Steuergerät 15 selbst ist noch eine Auswerteschaltung 16 angeordnet, in der die vom Aufnehmer 13 gelieferten Signale in geeigneter Weise verarbeitet werden. Weiterhin ist gemäß Figur 1 noch eine Anzeige 17 vorgesehen, die mit dem Steuergerät 15 verbunden ist und von diesem angesteuert wird.

Der Bereich zwischen dem vorderen Teil der Markierung 12a und dem vorderen Teil der Markierung 12c wird als Segment SA bezeichnet, zwei weitere Segmente SB und SC werden in ähnlicher Weise gebildet.

Im Betrieb der Brennkraftmaschine dreht sich die Kurbelwelle 11 und damit auch das Geberrad 10, der Beginn und das Ende einer jeden Winkelmarke erzeugt im Aufnehmer 13 einen positiven bzw. einen negativen Spannungsimpuls, die Pulsfolge ist in Figur 1 als $U_A(t)$ dargestellt.

Das in Figur 1 abgebildete Geberrad mit den drei Segmenten SA, SB und SC ist für einen Sechszylindermotor geeignet, bei dem pro Verbrennungszyklus für eine optimale Auswertung sechs Impulse benötigt werden. Die im folgenden angegebenen Berechnungen beziehen sich ebenfalls auf einen Sechszylindermotor.

Die in Figur 2 angegebene Impulsfolge $U_p(t)$, die durch Umformung von $U_A(t)$ gewonnen und im Steuergerät 15 ausgewertet wird, weist folgende Eigenschaften auf: Die Abstände zwischen den einzelnen Impulsen sind, auf die Kurbelwellenstellung bezogen 120° KW. Auf die Zeit t bezogen entspricht der Abstand zwischen den ersten beiden Impulsen SA(t) der Zeitdauer, die verstreicht während das Segment SA den Aufnehmer 13 passiert. SB (t) und SC (t) sind entsprechend die Zeitdauern, die während des Vorbeilaufens der Segmente SB bzw. SC verstreichen. SA(t), SB(t) und SC(t) werden als Segmentdauern bezeichnet.

SA (t+1), SB (t+1) und SC (t+1) sind die entsprechenden Zeitdauern, eine Kurbelwellenumdrehung später. Entsprechendes gilt für die weiteren Zeitdauern SA (t+2) usw.

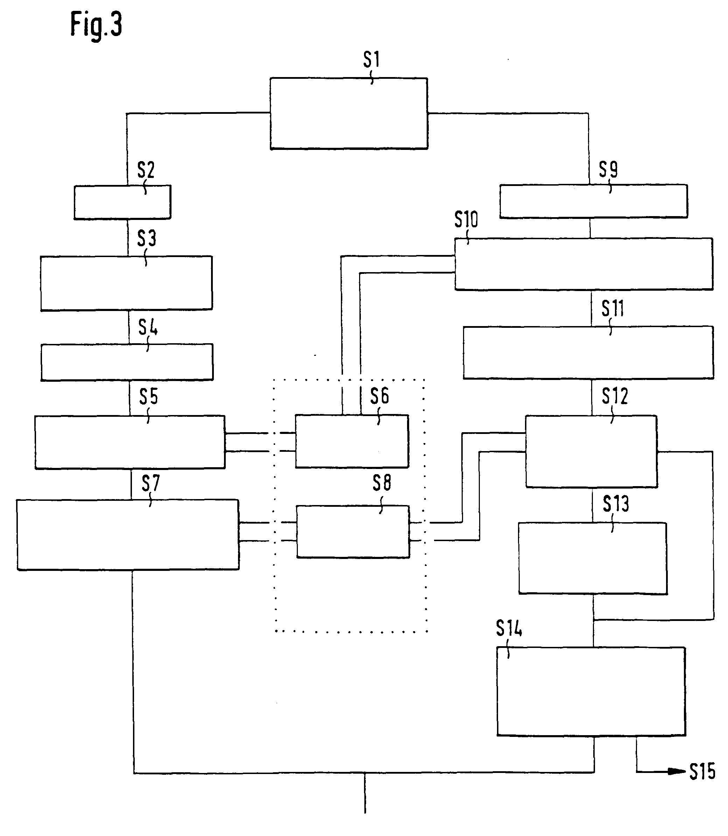

Anhand des in Figur 3 dargestellten Flußdiagramms soll nun das erfindungsgemäße Verfahren zur Adaption von mechanischen Toleranzen eines Geberrades erläutert werden.

In einem ersten Schritt S1 wird überprüft, ob sich der Motor im Schubbetrieb befindet. Dazu wird überprüft, ob sich der Motor im Null-Lastbereich befindet und ob sich die Drehzahl in einem Bereich zwischen 1800 und 3000 Umdrehungen pro Minute befindet. Diese beiden Bedingungen sind Voraussetzungen dafür, daß Schubbetrieb vorliegt.

Wenn im ersten Schritt S1 erkannt wird, daß sich der Motor im Schubbetrieb befindet, wird in einem weiteren Schritt S2 die Adaption begonnen. Eine Adaption der Winkelmarken im Schubbetrieb ist möglich, da die Laufruhe durch die Schwungmasse des Motors im Schubbetrieb nahezu den Wert Null erreicht, daß also keine Drehzahlschwankungen vorliegen. Während eines solchen Betriebszustandes kann davon ausgegangen werden, daß sämtliche Intervalle zwischen äquidistanten Winkelmarken gleich groß sein müßten. Eine gemessene Abweichung kann daher zu Korrekturzwekken der mechanischen Abweichungen für die Winkelmarken verwendet werden.

Zur Realisierung der Adaption werden zunächst in einem Schritt S3 die Segmentabweichungen $\Delta AB(t)$, $\Delta AC(t) \dots$ berechnet. Dazu werden einzelnen Segmentdauern SA (t), SB (t), SC (t), SA (t+1), ... gemessen. Aus diesen gemessenen Zeiten wird nach Ablauf einer Nokkenwellenumdrehung, also nach Ablauf zweier Umdrehungen der Kurbelwelle, die Berechnung begonnen, dabei werden die Segmentabweichungen jeweils auf das Segment SA bezogen. Die Rechnung selbst erfolgt nach folgenden Formeln:

$$\Delta AB(t) = SA(t) + \frac{SA(t+2) - SA(t)}{Z} - SB(t)$$

$$\Delta AC(t) = SA(t) + \frac{2\,[\,SA(t+2) - SA(t)\,]}{Z} - SC(t)$$

$$\Delta AB(t+1) = SA(t) + \frac{4\,[\,SA(t+2) - SA(t)\,]}{Z} - SB(t+1)$$

$$\Delta AC(t+1) = SA(t) + \frac{5\,[\,SA(t+2) - SA(t)\,]}{Z} - SC(t+1)$$

Der Faktor Z im Nenner der vier Gleichungen entspricht der Zylinderzahl, im vorliegenden Ausführungsbeispiel wäre Z=6.

Da die Berechnung nach Ablauf einer Nockenwellenumdrehung, also nach zwei Kurbelwellenumdrehungen durchgeführt wird, muß zur Berechnung der Segmentabweichung bei der ersten Umdrehung $\Delta AB(t)$ bzw. $\Delta AC(t)$ die Segmentdauer der zweiten Kurbelwellenumdrehung SA (t + 2) in die Berechnung aufgenommen werden.

Die im Schritt S3 berechneten Segmentabweichungen $\Delta AB(t)$, $\Delta AC(t)$, ... werden im Schritt S4 einer Dynamikkompensation unterworfen. Dabei wird nach Überschreiten einer maximalen Dynamik, wenn also die Segmentdauerdifferenz SA (t +2) - SA (t) zu groß wird, wird die Adaption abgebrochen.

Weiterhin wird eine Auswahl der kleinsten Abweichung für die Drehzahlkorrektur vorgenommen, dabei werden die beiden, sich jeweils entsprechenden Abweichungen zur ersten Segmentdauer $\Delta$ AB (t) und $\Delta$ AB (t + 1) bzw. $\Delta$ AC (t) und $\Delta$ AC (t + 1) zunächst auf gleiches Vorzeichen überprüft. Ergibt dieser Vergleich, daß beide sich entsprechenden Segmentabweichungen gleiches Vorzeichen aufweisen, wird der kleinere der beiden Werte für die Adaption verwendet. Durch diese Vorgehensweise wird sichergestellt, daß nur der Anteil, der bei beiden enthalten ist, zur Adaption herangezogen wird.

Die erhaltenen Segmentdauern für die Segemente SB und SC werden durch die Referenzsegmentdauer SA (t) dividiert, so daß die Abweichung als winkelproportionale drehzahlunabhängige Größe XSB bzw. XSC vorliegt.

Wenn die beiden sich entsprechenden Segmentabweichungen ungleiche Vorzeichen aufweisen, werden die entsprechenden momentanen Korrekturfaktoren XSB bzw. XSC gleich Null gesetzt.

Im Schritt S5 werden die am Ende von Schritt S4 vorliegenden momentanen Korrekturfaktoren XSB bzw. XSC einem digitalen Tiefpaßfilter zugeführt und geglättet. Die so erhaltenen gemittelten Korrekturfaktoren ASB (t) und ASC (t) berechnen sich nach den Formeln:

$$ASB(t) = K1.ASB(t-1) + (1-K1).XSB$$

$$ASC(t) = K1.ASC(t-1) + (1-K1).XSC$$

Der Faktor K1 stellt einen Filterfaktor dar, er kann Werte zwischen 0 und 1 aufweisen, wobei bei $K1 \approx 0$ eine schwache und bei $K1 \approx 1$ eine starke Mittelung erfolgt.

Eine Begrenzung der gemittelten Korrekturfaktoren ASB (t) und ASC (t) auf plausible Maximalwerte erhöht die Zuverlässigkeit des Verfahrens, gemittelte Korrekturfaktoren die diese plausible Grenze übersteigen, werden daher nicht verwendet.

Die am Ende des Schrittes 5 erhaltenen und gefilterten Korrekturfaktoren ASB (t) und ASC (t) werden in einem Schritt S6 in einem nichtflüchtigen Speicher des Steuergeräts abgelegt, sie stehen damit für weitere Auswertungen zur Verfügung.

Im Schritt S7 wird die Abweichung des Adaptions-Meßwertes XSB von dem geglätteten Wert ASB ermittelt und in einem weiteren digitalen Tiefpaßfilter geglättet. Dabei wird davon ausgegangen, daß die Abweichung des Adaptions-Werts XSC vom geglätteten Wert ASC bzw. die Abweichung aller weiteren, Segmentzeiten entsprechenden Meßwerte zu entsprechenden Filterwerten sich ähnlich verhalten wie die Abweichung XSB zu ASB. Die entsprechenden Einschwingwerte FE SB1 (t) und FE SB2 (t) werden nach folgender Formel gebildet:

$$FE\ SB1(t) = K2 \cdot FE\ SB1(t-1) + (1-K2).[ASB(t)-XSB(t)]$$

und

$$FE\ SB2(t) = K2 \cdot FE\ SB2(t-1) + (1-K2).[ASB(t)-XSB(t)],$$

wobei die Ausgangswerte beim Beginn der Iteration unterschiedlich sind.

Der zweite Filterfaktor K2 kann beispielsweise 0,996 betragen, er sollte jedoch wesentlich kleiner sein als der Faktor KI bei der Filterung der Adaptions-Werte.

Von den beiden Werten FE SB1 und FE SB2 wird der Betrag gebildet und wenn der Betrag von FE SB1 oder FE SB2 größer als ein Festwert FREFmin ist, dann wird der im Zusammenhang mit der Aussetzererkennung noch näher erläuterte Laufunruhe-Referenzwert LUR auf einen drehzahlabhängigen Minimalwert REFmin begrenzt, FREFmin entspricht dem für die Funktion erforderlichen Toleranzwert und REFmin ist proportional zu dem ohne Adaption realisierbaren Toleranzwert.

Sind die Werte FE SB1 und FE SB2 über einen längeren Zeitraum kleiner als FREFmin, kann die Adaption abgeschaltet werden, bzw. der Filterfaktor K1 vergrößert werden. Sie kann jedoch beim nächsten Kundendienst wieder aktiviert werden, dies ist insbesondere dann erforderlich, wenn das Geberrad oder das Steuergerät ausgewechselt werden.

Die am Ende des Schritts S7 erhaltenen Einschwingwerte FE SB1 (t) und FE SB2 (t) werden in einem Schritt S8 in einem nichtflüchtigen Speicher des Steuergeräts abgelegt und stehen für weitere Auswertungen bzw. Berechnungen zur Verfügung.

Nach dem Neustart der Adaption bzw. bei der ersten Inbetriebnahme werden folgende Werte vorgegeben:

für die Adaptions-Meßwerte: XSB = XSC = 0

für die Adaptions-Mittelwerte: ASB = ASC = 0

für die Einschwingwerte: FE SB1 = X

FE SB2 = -X

X entspricht dabei einen Wert, der der größten zulässigen Toleranz bei der Fertigung des Geberrades entspricht. Als Anfangswerte für die Filter werden die zwei äußersten Toleranzwerte verwendet.

Wenn im Schritt S1 erkannt wird, daß sich der Motor nicht im Schubbetrieb befindet, läuft im Steuergerät die normale Motorsteuerung ab, zusätzlich wird ein Schritt S9 aktiviert, der letztendlich die Aussetzererkennung auslöst.

Wird die Aussetzerkennung durchgeführt, bevor eine Adaption erfolgt ist, werden die beim Neustart bzw. der ersten Inbetriebnahme vorgegebenen Werte verwendet, die Schrittfolge S2 bis S8 muß nicht notwendigerweise vor der Schrittfolge S9 bis S14 ablaufen.

Nach Beginn der Aussetzererkennung werden in einem Schritt S10 die im nichtflüchtigen Speicher gespeicherten Adaptionswerte ASB, ASC eingelesen und zur Korrektur der Meßwerte der Segmentdauer verwendet.

Dabei wird der Adaptions-Mittelwert ASB bzw. ASC (je nach Segment bzw. Zylindernummer) mit der Segmentdauer multipliziert, als Ergebnis ergibt sich die korrigierte Segmentdauer, mit der die weiteren Berechnungen zur Aussetzererkennung ablaufen. Für das Segment SA werden keine Korrekturen vorgenommen.

Die korrigierten Segmentdauern SB(t), SC(t) und die nichtkorrigierte Segmentdauern SA(t) werden im Schritt SII zur genauen Ermittlung der Drehzahl verwendet, wobei in, beispielsweise aus der DE-OS 28 07 376, bekannter Weise die Proportionalität der Drehzahl zum Kehrwert der (korrigierten) Segmentdauer ausgenutzt wird. Aus diesen genauen Drehzahlwerten wird in einem Schritt S11 die Laufunruhe berechnet und außerdem ein Schwellwert bzw. ein Laufunruhe-Referenzwert Lur, der für die im Schritt S14 durchgeführte Aussetzererkennung benötigt wird.

Die Berechnung der Laufunruhe bzw. die Aussetzererkennung aus den präzisen Drehzahlwerten erfolgt in üblicher Weise durch Vergleich der Drehzahländerungen mit einem vorgegebenen Schwellwert und soll hier nicht näher erläutert werden. Beispiele für solche Aussetzererkennungen sind der DE-OS 39 17 978 zu entnehmen.

Im Schritt S12 wird überprüft ob der Lernfortschritt ausreichend ist. Ist dies nicht der Fall, wird in einem Schritt S13 ein neuer drehzahlabhängiger Minimalwert für den Schwellwert gebildet und es erfolgt anschließend im Schritt S14 die Aussetzererkennung.

Wird im Schritt S12 erkannt, daß der Lernfortschritt ausreichend ist, erfolgt direkt die Aussetzererkennung im Schritt S14.

Bei Überschreiten bestimmter Grenzwerte wird im Schritt S14 die Adaption abgeschaltet, außerdem umfaßt dieser Schritt noch das Aufstellen einer Statistik zur Aussetzererkennung.

In einem weiteren Schritt S15 erfolgt eine Anzeige sobald ein Verbrennungsaussetzer erkannt wird.

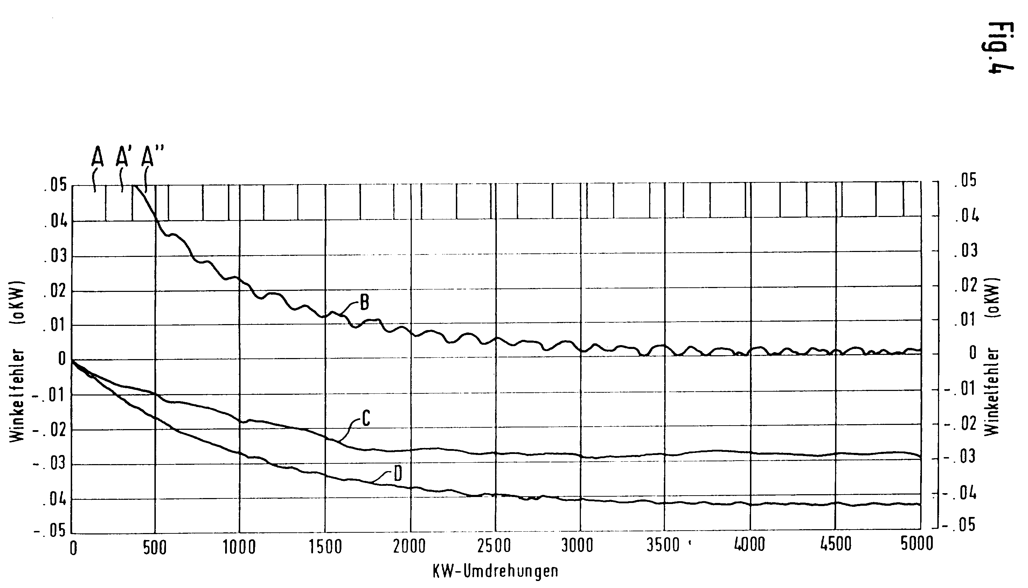

In Figur 4 sind die Veränderungen der Winkelfehler in Abhängigkeit einer Anzahl von Kurbelwellenumdrehungen aufgetragen, die sich bei einer Auswertung ergaben. Diese Winkelfehler wurden jeweils im Schubbetrieb ermittelt.

Im obersten Bereich der Figur 4 sind eine Anzahl A, A', A'' von Bereichen aufgetragen, die durch vertikale Linien voneinander getrennt sind. Jeder Bereich zwischen zwei solchen Linien stellt einen erkannten Schubbereich dar. Durch Aneinandersetzen solcher Bereiche wurde ein Gesamtbereich, der sich über 5000 Kurbelwellenumdrehungen erstreckt erhalten, innerhalb dieses gesamten Bereichs erfolgte die Adaption. Dabei ergaben sich für die Veränderungen der einzelnen Größen die in der Figur 4 dargestellten Werte, die oberste Kurve B zeigt die Änderungen für das Einschwingen der Filter, sie geht gegen Null, wenn die Adaption eingeschwungen ist. Die mittlere Kurve C zeigt den Winkelfehler bzw. die Segmentabweichung für das Segment SB und die unterste Kurve D den Winkelfehler für das Segment SC. Die beiden Werte sind zunächst auf Null gesetzt und erreichen mit zunehmender Adaption ihre tatsächlichen Werte.

Das in Figur 1 dargestellte Ausführungsbeispiel sowie das in Figur 3 gezeigte Flußdiagramm für das Verfahren zur Adaption von mechanischen Toleranzen eines Geberrades lassen sich weitgehend verallgemeinern. So kann beispielsweise ein anderes Geberrad mit einer Vielzahl von Marken eingesetzt werden, ebenso ist es möglich, ein Geberrad mit wechselnden magnetischen Eigenschaften an seiner Oberfläche einzusetzen, wobei jeweils zu beachten ist, daß Geberrad 10 und Aufnehmer 13 in geeigneter Weise aufeinander abgestimmt sind, beispielsweise kann ein aus ferromagnetischem Material gefertigtes Geberrad mit einem Induktivsensor abgetastet werden.

Für eine Brennkraftmaschine mit anderer Zylinderzahl als sechs sind nicht drei, sondern Z/2-Segmente auszuwerten, wobei Z der Zylinderzahl entspricht.

**Patentansprüche**

1. Verfahren zur Adaption von mechanischen Toleranzen eines Geberrades, das mit einer sich drehenden Welle einer Brennkraftmaschine in Verbindung steht und eine Anzahl von Markierungen aufweist, deren Abstand näherungsweise gleich sind, mit einem Aufnehmer, der das sich drehende Geberrad abtastet und eine von der Lage der Markierungen abhängige Pulsfolge liefert, wobei eine der Anzahl der Markierungen entsprechende Anzahl von Segmentdauern SA, SB, SC, ... ermittelt wird und für die zweite und jede folgende Segmentdauer die Abweichung zur ersten Segmentdauer $\Delta AB$, $\Delta AC$, ... bestimmt wird und die ermittelten Abweichungen jeweils durch die erste Segmentdauer dividiert werden, so daß sich für das zweite und jedes weitere Segment ein momentaner Korrekturfaktor XSB, XSC, ... ergibt und durch digitale Filterung in einem iterativen Prozess der gemittelte Korrekturfaktor für das zweite und jedes folgende Winkelsegment an seinen korrekten Wert ASB, ASC, ... angepaßt wird und die Adaption nur dann durchgeführt wird, wenn erkannt wird, daß sich die Brennkraftmaschine im Schubbetrieb befindet.

2. Verfahren nach Anspruch 1, dadurch gekennzeichnet, daß das Geberrad mit der Kurbelwelle einer Brennkraftmaschne verbunden ist und die Zahl der Markierungen gleich der halben Zylinderzahl der Brennkraftmaschine ist.

3. Verfahren nach Anspruch 1 oder 2, dadurch gekennzeichnet, daß die Differenz zwischen den gefilterten gemittelten Korrekturfaktoren ASB, ASC, ... und dem zugehörigen ungefilterten Korrekturfaktor XSB, XSC, ... gebildet wird und einem Digitalfilter zugeführt wird.

4. Verfahren nach einem der vorhergehenden Ansprüche, dadurch gekennzeichnet, daß aus jeder Segmentdauer (SA, SB, SC) die Drehzahl berechnet wird, wobei die Berechnung aus dem Kehrwert des Produktes aus der gemessenen Segmentdauer und dem zugehörigen Korrekturfaktor ermittelt wird.

5. Verfahren nach Anspruch 4, dadurch gekennzeichnet, daß die durch Adaption korrigierten Drehzahlen miteinander verglichen werden zur Ermittlung von Drehzahlschwankungen, daß ein Schwellwert gebildet wird, der mit den ermittelten Drehzahlschwankungen verglichen wird zur Bestimmung der Laufruhe.

6. Verfahren nach Anspruch 5, dadurch gekennzeichnet, daß der Schwellwert auf einen drehzahlabhängigen Minimalwert begrenzbar ist, wenn eine Überprüfung der Adaptionswerte bzw. der Korrekturfaktoren ergibt, daß die Adaption noch nicht vollständig ist.

7. Verfahren nach Anspruch 5 oder 6, dadurch gekennzeichnet, daß aus den ermittelten Drehzahlschwankungen Verbrennungsaussetzer erkannt und angezeigt werden, wobei die Erkennung erfolgt, wenn eine ermittelte Drehzahlschwankung den Schwellwert überschreitet.

**Claims**

1. Method for adapting mechanical tolerances of a sensor wheel which is connected to a rotating shaft of an internal combustion engine and has a number of markings whose spacings are approximately equal, having a pick-up which scans the rotating sensor wheel and delivers a pulse train dependent on the position of the markings, a number of segment durations SA, SB, SC,... which corresponds to the number of markings being determined and the deviation relative to the first segment duration

$\Delta AB$, $\Delta AC$,... being determined for the second and each following segment duration, and the deviations determined being divided in each case by the first segment duration, with the result that an instantaneous correction factor XSB, XSC,... is produced for the second and each further segment, and by digital filtering in an iterative process the averaged correction factor for the second and each following angular segment is matched to its correct value ASB, ASC,..., and the adaptation is carried out only if it is detected that the internal combustion engine is in overrun.

2. Method according to Claim 1, characterized in that the sensor wheel is connected to the crankshaft of an internal combustion engine, and the number of the markings is equal to half the number of the cylinders of the internal combustion engine.

3. Method according to Claim 1 or 2, characterized in that the difference between the filtered averaged correction factors ASB, ASC,... and the associated unfiltered correction factors XSB, XSC,... is formed and fed to a digital filter.

4. Method according to one of the preceding claims, characterized in that the rotational speed is calculated from each segment duration (SA, SB, SC), the calculation being determined from the reciprocal of the product of the measured segment duration and the associated correction factor.

5. Method according to Claim 4, characterized in that the rotational speeds corrected by adaptation are compared with one another in order to determine fluctuations in rotational speed, and in that a threshold value is formed which is compared with the fluctuations determined in rotational speed in order to determine the running smoothness.

6. Method according to Claim 5, characterized in that the threshold value can be limited to a minimum value dependent on rotational speed if the result of a check of the adaptation values or the correction factors is that the adaptation is not yet complete.

7. Method according to Claim 5 or 6, characterized in that misfires are detected from the fluctuations determined in rotational speed and are displayed, the detection being performed when a fluctuation determined in rotational speed exceeds the threshold value.

**Revendications**

1. Procédé d'adaptation des tolérances mécaniques d'une roue phonique reliée à l'axe rotatif d'un moteur à combustion interne et ayant un certain nombre de repères dont la distance est sensiblement égale, un capteur qui détecte la roue phonique en rotation et fournit une suite d'impulsions dépendant de la position des repères, selon lequel on détermine un nombre de durées de segment SA, SB, SC, ... correspondant au nombre des repères, et pour la seconde durée de segment et chaque durée suivante on détermine la différence par rapport à la première durée ΔAB, ΔAC, ... et on divise les déviations obtenues, respectivement par la première durée de segment de façon à obtenir pour le second segment et chaque segment suivant, un coefficient de correction instantané XSB, XSC, ... et par filtrage numérique selon un procédé par itération, on adapte le coefficient de correction moyen au second segment angulaire et aux segments suivants à sa valeur de correction ASB, ASC, ... et on effectue seulement l'adaptation s'il est reconnu que le moteur à combustion interne est en mode de poussée.

2. Procédé selon la revendication 1,
caractérisé en ce que
la roue phonique est reliée au vilebrequin du moteur à combustion interne et le nombre des repères est égal à la moitié du nombre des cylindres du moteur à combustion interne.

3. Procédé selon la revendication 1 ou 2,
caractérisé en ce que
on forme la différence entre les coefficients de correction ASB, ASC, ... moyens, filtrés et le coefficient de correction correspondant non filtré XSB, XSC, ... et on applique le résultat à un filtre numérique.

4. Procédé selon l'une des revendications précédentes,
caractérisé en ce que
à partir de chaque durée de segment (SA, SB, SC), on calcule la vitesse de rotation, le calcul se faisant à partir de la valeur inverse du produit de durée mesurée du segment et du coefficient de correction correspondant.

5. Procédé selon la revendication 4,
caractérisé en ce que
l'on compare les vitesses de rotation corrigées par adaptation pour déterminer les oscillations de vitesse de rotation, et on forme une valeur de seuil qui est comparée aux oscillations moyennes de la vitesse de rotation pour déterminer la régularité de fonctionnement.

6. Procédé selon la revendication 5,
caractérisé en ce que
la valeur de seuil est limitée à une valeur minimale dépendant de la vitesse de rotation si un contrôle de la valeur d'adaptation ou des coefficients de correction montrent que l'adaptation n'est pas encore totale.

7. Procédé selon la revendication 5 ou 6,
caractérisé en ce que
à partir des variations obtenues de la vitesse de rotation, on détecte les ratés de combustion et on les affiche, la détection se faisant lorsqu'une oscillation obtenue de la vitesse de rotation dépasse le seuil.

**Fig.1**

**Fig.2**

# Fig.3

S1

S2

S3

S4

S5

S7

S6

S8

S9

S10

S11

S12

S13

S14

S15

Fig.4

KW-Umdrehungen

Winkelfehler (oKW)

Winkelfehler (oKW)